# DEMANDE DE BREVET EUROPEEN

(11) **EP 3 800 504 A1**
(43) Date de publication de la demande: **07.04.2021**
(21) Numéro de dépôt: 20197171.0
(22) Date de dépôt: 21.09.2020
(51) Int. Cl.: G03B 9/26

(54) **DISPOSITIF OBTURATEUR DE LUMIERE DESTINE A PROTEGER UNE CAMERA POSITIONNEE A PROXIMITE DU VITRAGE D'UN VEHICULE AUTOMOBILE ET VEHICULE CORRESPONDANT**

(30) Priorité: 03.10.2019 FR 1910961
(71) Demandeur: Renault S.A.S., 92100 Boulogne-Billancourt (FR)
(72) Inventeur: CHAPRON, Thibault, 78210 Saint Cyr L'ecole (FR)

(57) **Abrégé**

L'invention concerne un dispositif obturateur de lumière (10) destiné à protéger une caméra (5) positionnée à proximité du vitrage (2) d'un véhicule automobile de la lumière provenant de l'intérieur de l'habitacle (4). Le dispositif comprend deux lames planes transparentes (12, 14) sensiblement de même surface et séparées par une couche d'air, la deuxième lame (14) formant avec la première lame (12) un angle de 0° à 20°. Une pluralité de la melles opaques (16) inclinées, parallèles ou sensiblement parallèles sont disposées entre les deux lames (12, 14) et s'étendent d'une lame à l'autre. L'angle d'inclinaison des lamelles par rapport à la première lame (12) et leur écartement (e) sont choisis de sorte que des rayons lumineux (R1, R2, R4, R5, R6) entrant par la deuxième lame (14) sont arrêtés par une lamelle (16) sans sortir par la première lame (12) ou sortent par la première lame (12) dans une direction particulière.

## Description

L'invention a pour objet un dispositif obturateur de lumière destiné à protéger une caméra positionnée à proximité du vitrage d'un véhicule automobile et un véhicule équipé de ce dispositif.

De nombreux véhicules automobiles sont aujourd'hui équipés de caméras d'aide à la conduite. Notamment, certains véhicules sont équipés d'une caméra frontale disposée au niveau du pare-brise avant du véhicule afin de capturer des images au travers de celui-ci. Un obturateur en matériau opaque isole alors la lentille de la caméra du reste de l'habitacle afin d'éviter que la lentille ne reçoive de la lumière ou des reflets provenant de l'habitacle et susceptibles de perturber son fonctionnement. Une coque cache cet obturateur, ses interfaces et la platine collée sur le pare-brise sur laquelle est emboîté l'obturateur. Tous ces éléments sont très encombrants et la coque résultante est très large.

La tendance actuelle est à l'augmentation du champ de vision de la caméra, ce qui entraîne une augmentation du dimensionnement de l'obturateur et de sa coque et par conséquent de la surface du masque qu'ils forment sur le pare-brise. Ce masque peut créer un sentiment d'enfermement désagréable pour l'occupant, est disgracieux en termes de design et gêne la vision haute et la vision vers l'avant.

Par ailleurs, les pare-soleils classiques rabattables occupent de l'espace au niveau du pavillon en position rangée, en particulier suivant la direction longitudinale du véhicule, ce qui peut gêner la mise en place de grands toits panoramiques dont le conducteur peut profiter.

L'invention vise à surmonter tout ou partie des inconvénients précités.

A cet effet, un premier objet de l'invention concerne un dispositif obturateur de lumière destiné à protéger une caméra positionnée à proximité du vitrage d'un véhicule automobile de la lumière provenant de l'intérieur de l'habitacle, caractérisé en ce qu'il comprend :
- une première lame plane transparente,
- une deuxième lame plane transparente présentant une surface au moins égale à la surface de la première lame, la deuxième lame étant située à distance de la première lame et séparée de celle-ci par une couche d'air, la deuxième lame formant avec la première lame un angle de 0° à 20°,
- une pluralité de lamelles opaques parallèles ou sensiblement parallèles disposées entre les deux lames planes transparentes et s'étendant d'une lame à l'autre, les lamelles étant inclinées par rapport aux deux lames planes transparentes,
- l'angle d'inclinaison des lamelles par rapport à la première lame et l'écartement des lamelles les unes par rapport aux autres étant choisis de sorte que des rayons lumineux entrant par la deuxième lame sont arrêtés par une lamelle et ne sortent pas par la première lame ou sortent par la première lame dans une direction particulière.

Les lamelles permettent ainsi de bloquer totalement des rayons lumineux arrivant sur la deuxième lame du dispositif obturateur, notamment suivant un angle d'incidence dont la valeur fait partie d'un intervalle particulier. Cet intervalle particulier correspond à l'ensemble des valeurs des angles d'incidence de rayons qui ne traversent pas le dispositif obturateur de lumière, par exemple pour éviter qu'ils n'atteignent un dispositif situé du côté de la première lame à un emplacement particulier. On notera que les rayons lumineux dont l'angle d'incidence n'est pas compris dans cet intervalle particulier peuvent traverser le dispositif obturateur de lumière qui agit ainsi à la manière d'un filtre. On notera également que l'angle d'inclinaison et l'écartement des lamelles sont choisis de sorte que ces rayons lumineux qui traversent le dispositif obturateur de lumière sortent par la première lame dans une direction particulière, par exemple distincte d'une direction d'un dispositif à protéger des rayons. En outre, cette direction particulière peut être telle que ces rayons soient réfléchis par le vitrage adjacent dans une zone particulière, par exemple distante d'une zone que l'on souhaite préserver de ces rayons.

Avantageusement, les lamelles peuvent être chacune fixées à la première lame et à la deuxième lame.

En variante, les lamelles peuvent être uniquement fixées à l'une des lames et en appui contre l'autre lame, notamment en appui glissant.

Avantageusement, l'écartement entre les lamelles peut être différent. On peut par exemple prévoir un écartement des lamelles plus faible à une extrémité du dispositif obturateur de lumière que l'écartement des lamelles à l'autre extrémité du dispositif obturateur de lumière. Ceci permet de restreindre davantage la traversée de rayons lumineux du côté où l'écartement est le plus faible.

Avantageusement, chaque lamelle peut présenter une direction longitudinale et les directions longitudinales des lamelles peuvent être parallèles entre elles et parallèles à des bords opposés parallèles des première et deuxième lames.

Dans un mode de réalisation, une lame peut être fixe et l'autre lame peut être mobile entre une première position dans laquelle les lamelles sont inclinées par rapport à la première lame suivant un premier angle d'inclinaison et une deuxième position dans laquelle les lamelles sont inclinées par rapport à la première lame suivant un deuxième angle d'inclinaison inférieur au premier angle d'inclinaison. Il est ainsi possible de réduire ou d'augmenter la quantité de lumière pouvant traverser l'obturateur de lumière. Notamment, dans la deuxième position, le dispositif d'obturateur de lumière peut être utilisé comme pare-soleil dans un véhicule, l'angle d'inclinaison peut alors être choisi de sorte que les lamelles soient inclinées d'un angle faible par rapport à une direction horizontale de sorte que les rayons provenant de l'extérieur du véhicule qui traversent le dispositif obturateur de lumière restent proches du toit du véhicule et n'atteignent pas le conducteur ou son passager lorsque le dispositif obturateur est placé au dessus d'eux. A titre d'exemple, dans la deuxième position, les lamelles peuvent être inclinées d'un angle de 0° à 20°par rapport à la direction horizontale lorsque le dispositif obturateur de lumière est en position haute à l'intérieur de l'habitacle d'un véhicule automobile.

Dans ce mode de réalisation, le dispositif obturateur peut comprendre une ou plusieurs des caractéristiques suivantes :
- lorsque les lamelles ne sont fixées qu'à une seule des deux lames, elles sont fixées à la lame fixe et peuvent alors glisser sur la surface de la lame mobile,
- la lame fixe est la première lame,
- au moins un organe de commande du déplacement de la lame mobile,
- au moins un système de guidage du déplacement de la lame mobile.

Quelque soit le mode de réalisation, le dispositif selon l'invention peut comprendre au moins une des caractéristiques suivantes :
- la première et la deuxième lame sont en un matériau transparent choisi parmi un verre minéral et un verre organique,
- chaque lamelle est formée d'une feuille de matériau polymère opaque, notamment suffisamment fine pour être déformée lorsque la lame mobile passe de la première position à la deuxième position ou vice versa.

L'invention a aussi pour objet un véhicule automobile comprenant à l'intérieur d'un habitacle, au moins une caméra équipée d'une lentille positionnée à proximité d'un vitrage du véhicule automobile, caractérisé en ce qu'un dispositif obturateur de lumière selon l'invention est disposé en regard du vitrage, d'un côté de la caméra opposé au vitrage, la première lame du dispositif obturateur s'étendant à proximité immédiate de la caméra, au moins depuis la lentille de la caméra jusqu'au vitrage, la surface de la première lame étant suffisamment grande pour isoler entièrement la lentille de la caméra du reste de l'habitacle du véhicule, l'angle d'inclinaison et l'écartement des lamelles étant choisis de sorte des rayons lumineux indésirables provenant de l'habitacle et entrant par la deuxième lame sont arrêtés par une lamelle et ne sortent pas par la première lame ou sortent par la première lame dans une direction particulière qui n'est pas dirigée vers la lentille de la caméra et sont éventuellement réfléchis par le vitrage dans une direction de réflexion qui n'est pas dirigée vers la lentille de la caméra.

La lentille de la caméra est ainsi protégée de manière simple et efficace des rayons lumineux provenant de l'habitacle et susceptibles de perturber son fonctionnement.

Le vitrage peut par exemple être un pare-brise avant ou une vitre arrière de véhicule.

Avantageusement, la caméra peut être positionnée à proximité d'un toit du véhicule, par exemple en hauteur à proximité du pare-brise avant ou de la vitre arrière. Le dispositif obturateur est alors disposé au dessus des occupants du véhicule de sorte qu'il peut jouer le rôle de pare-soleil, en particulier pour le conducteur et le passager avant. La caméra pourrait cependant également être positionnée dans une position basse, par exemple à proximité du bas de la vitre arrière du véhicule.

Avantageusement, les lamelles peuvent présenter une direction longitudinale qui s'étend suivant une direction parallèle à la surface du vitrage et peuvent être inclinées vers une partie centrale de l'habitacle par rapport à la première lame.

Ainsi, lorsque la caméra est positionnée en hauteur au niveau du pare-brise avant du véhicule, les lamelles sont inclinées vers l'arrière du véhicule par rapport à la première lame. Dès lors, selon l'angle d'inclinaison des lamelles, le conducteur et/ ou le passager avant peuvent voir à l'extérieur du véhicule entre les lamelles. Lorsque la caméra est positionnée au niveau de la vitre arrière du véhicule, les lamelles sont inclinées vers l'avant du véhicule.

Par ailleurs, lorsque le dispositif obturateur de lumière comprend une lame mobile et une lame fixe, dans la première position de la lame mobile, les lamelles peuvent être inclinées vers une partie centrale de l'habitacle suivant un angle de 25° à 70° par rapport à une direction horizontale et dans la deuxième position de la lame mobile, les lamelles peuvent être inclinées vers une partie centrale de l'habitacle suivant un angle de 0° à 20° par rapport à la direction horizontale. Dans les deux positions, seuls les rayons parallèles ou sensiblement parallèles aux lamelles peuvent traverser le dispositif obturateur selon l'invention. Toutefois, lorsque le dispositif obturateur est disposé au-dessus d'un conducteur et du passager avant, dans la première position, l'inclinaison des lamelles permet aux rayons lumineux entrant dans l'habitacle d'atteindre le conducteur et/ou le passager avant qui a ainsi une vision de l'extérieur, alors que dans la deuxième position, l'inclinaison des lamelles est telle que les rayons lumineux qui traversent le dispositif obturateur se propagent au-dessus du conducteur ou de son passager avant, le dispositif obturateur jouant alors le rôle d'un pare soleil.

Avantageusement, pour améliorer le blocage des rayons lumineux indésirables, les lamelles proches de la lentille de la caméra peuvent présenter un écartement inférieur à l'écartement des lamelles distantes (plus éloignées) de la lentille de la caméra.

L'invention est maintenant décrite en référence aux dessins annexés, non limitatifs, dans lesquels :
[Fig. 1] la figure 1 représente schématiquement un véhicule automobile selon un mode de réalisation de l'invention,
[Fig. 2] la figure 2 représente schématiquement une vue de dessus en perspective d'un dispositif obturateur de lumière selon un mode de réalisation de l'invention,
[Fig. 3] la figure 3 représente schématiquement une vue de côté du dispositif obturateur selon un autre mode de réalisation,
[Fig. 4] la figure 4 représente schématiquement une vue de côté du dispositif obturateur de la figure 2 disposé à l'intérieur de l'habitacle d'un véhicule automobile, dans une première position,
[Fig. 5] la figure 5 est une vue similaire à la figure 4, le dispositif obturateur étant dans une position intermédiaire,
[Fig. 6] la figure 6 est une vue similaire à la figure 4, le dispositif obturateur étant dans une deuxième position.

Dans la présente description, les termes avant, arrière, supérieur, inférieur, font référence aux directions avant et arrière, haute et basse du véhicule, lorsque le dispositif obturateur de lumière est monté à l'intérieur du véhicule. Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

Par sensiblement parallèle, on entend une direction/un plan s'écartant d'au plus ±20°, voire d'au plus 10° ou d'au plus 5°d'une dir ection/d'un plan parallèle.

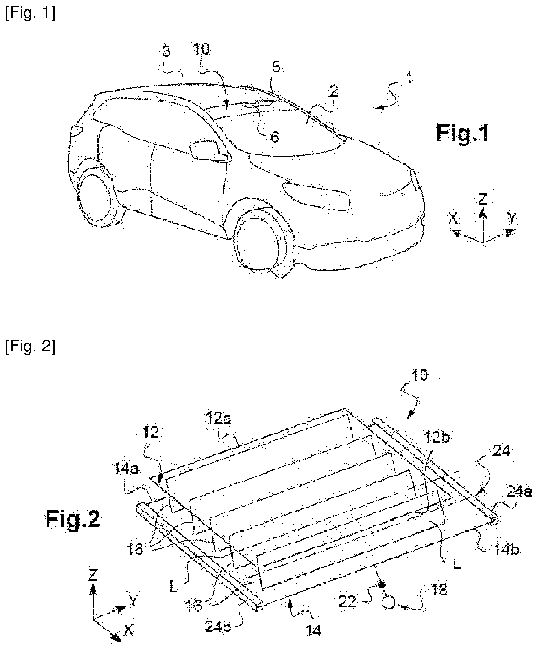

La figure 1 représente schématiquement un véhicule automobile présentant un pare-brise 2 et un toit panoramique 3 s'étendant dans la continuité du pare-brise 2 suivant la direction longitudinale du véhicule.

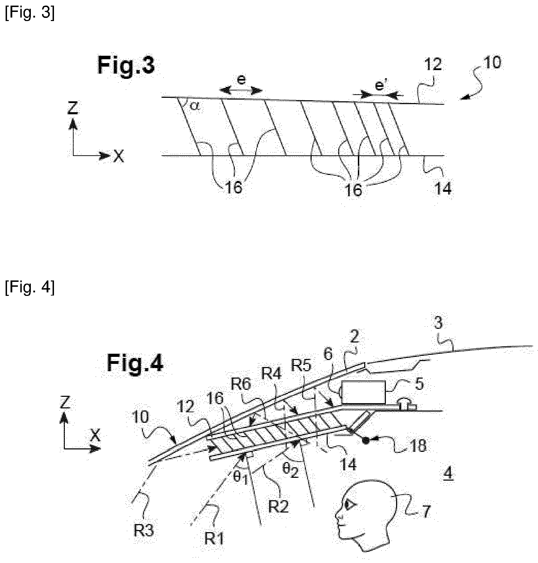

Tel que visible plus particulièrement sur les figures 4 à 6, à l'intérieur de l'habitacle 4 du véhicule, une caméra 5 est positionnée à proximité du pare-brise 2, ici à proximité de son extrémité supérieure. La lentille 6 de la caméra est positionnée à proximité immédiate du pare-brise 2 afin de capturer les images provenant de l'extérieur de l'habitacle 4 au travers du pare-brise 2. Ce type de caméra 5 a habituellement des fonctions de détection des véhicules, des piétons, lecture des panneaux de signalisation.

Le véhicule automobile 1 est en outre équipé d'un dispositif obturateur de lumière 10 disposé en regard du pare-brise 2, d'un côté de la caméra 5 opposé au pare-brise 2 (voir figures 4 à 6).

Le dispositif obturateur de lumière 10 comprend une première lame plane transparente 12 et une deuxième lame plane transparente 14 présentant une surface au moins égale à la surface de la première lame 12. Ici, les deux lames 12, 14 sont de même forme. Dans l'exemple, ces lames sont rectangulaires. D'autres formes sont envisageables, il est toutefois préférable que deux bords opposés des lames soient des bords parallèles pour faciliter l'agencement des lamelles décrites ci-après.

La deuxième lame 14 est située à distance de la première lame 12 et séparée de celle-ci par une couche d'air. La deuxième lame 14 forme avec la première lame 12 un angle de 0° à 20° Pour un encombrement plus réduit, quelque le soit le mode de réalisation du dispositif obturateur 10, les deux lames 12 à 14 peuvent avantageusement former un angle de 0° à 15°, voire de 0° à 10°ou de 0° à 5°ou un angle compris dans n'importe laquelle des combinaisons formées par ces bornes.

Dans l'exemple, la première lame 12 est une lame supérieure et la deuxième lame 14 est une lame inférieure.

Le dispositif obturateur de lumière 10 comprend également une pluralité de lamelles opaques 16 parallèles, ou sensiblement parallèles, disposées entre les deux lames planes transparentes 12, 14 et s'étendant d'une lame à l'autre, les lamelles étant inclinées par rapport aux deux lames planes transparentes.

Par lame transparente, on entend une lame en un matériau laissant passer les rayons lumineux. Autrement dit, une lame transparente forme un milieu transparent qui laisse passer les rayons lumineux sans les absorber. Les lames peuvent ainsi être en verre minéral ou organique. Le verre organique est par exemple un polycarbonate ou tout type de verre organique tel que du poly(méthacrylate de méthyle) (ou PMMA).

Par lamelle opaque, on entend une lamelle en un matériau arrêtant les rayons lumineux. Autrement dit, une lamelle opaque forme un milieu opaque qui absorbe entièrement les rayons lumineux. Un matériau utilisable est une feuille de matériau polymère opaque. L'utilisation d'une feuille permet de réaliser une lamelle souple apte à se déformer sans se rompre. A titre d'exemple, l'épaisseur d'une telle feuille est inférieure ou égale à 2mm, de préférence inférieure ou égale à 1mm, voire inférieure ou égale à 0,8mm, par exemple de 0,2 à 0,8mm ou dans tout autre intervalle défini par ces bornes.

Selon l'invention, l'angle d'inclinaison alpha (α) des lamelles par rapport à la première lame et l'écartement (e) des lamelles les unes par rapport aux autres sont choisis de sorte que des rayons lumineux entrant par la deuxième lame sont arrêtés par une lamelle 16 et ne sortent pas par la première lame 12, ou sortent par la première lame 12 dans une direction particulière.

L'écartement (e) est défini comme la distance séparant deux lamelles 16 mesurée parallèlement à la première lame 12, et perpendiculairement à une direction longitudinale L des lamelles. Lorsque deux lamelles adjacentes ne sont pas strictement parallèles, l'écartement (e) est défini comme la distance tel que précédemment définie mesurée à mi-distance entre les deux lames 12, 14. Cet écartement (e) peut être déterminé en fonction des rayons lumineux que l'on veut laisser passer ou bloquer, de la position de la caméra à protéger et de l'orientation des lames.

Dans l'exemple, les rayons lumineux entrant par la deuxième lame 14 proviennent de l'intérieur de l'habitacle. Les rayons lumineux R1, R2 représentés figure 3 arrivent directement sur la deuxième lame 14 avec respectivement des angles d'incidence θ1, θ2 (mesurés de manière usuelle par rapport à la normale au plan de la deuxième lame 14) et sont arrêtés par les lamelles 16. Les angles θ1, θ2 sont dans l'exemple de 50° à 80°. Le rayon lumineux R3 provient également de l'habitacle mais arrive sur le dispositif obturateur 10 par réflexion sur le pare-brise 2. Dans l'exemple, il arrive sur le dispositif obturateur 10 entre les lames 12, 14 et est arrêté par les lamelles 16 qui s'étendent d'une lame à l'autre.

Certains rayons lumineux R4, R5, R6 provenant de l'intérieur de l'habitacle traversent le dispositif obturateur 10 dont ils sortent suivant une direction particulière qui n'est pas dirigée vers la lentille de la caméra. Enfin, ces rayons R4, R5, R6 peuvent être réfléchis par le pare-brise 2, tel que représenté sur la figure 3, mais dans des directions qui ne sont pas dirigées vers la lentille de la caméra, qui est donc protégée de tous les rayons lumineux provenant directement ou indirectement de l'intérieur de l'habitacle.

Les lamelles 16 peuvent être chacune fixées à la première lame 12 et à la deuxième lame 14, ou en variante, les lamelles 16 peuvent être uniquement fixées à l'une des lames et en appui contre l'autre lame.

Les lamelles 16 peuvent être collées au(x) lame(s) par collage ou thermocollage.

Tel que déjà mentionné, chaque lamelle 16 présente une direction longitudinale (L). Les directions longitudinales de ces lamelles sont parallèles entre elles et parallèles à des bords opposés parallèles 12a, 12b, respectivement 14a, 14b des première et deuxième lames 12, 14. Ceci permet de simplifier la réalisation du dispositif obturateur 10.

De manière avantageuse, le dispositif obturateur selon l'invention, quelque soit son mode de réalisation, peut présenter une faible épaisseur (mesurée perpendiculairement à la première lame), par exemple de 4 à 10mm, de préférence de 4 à 8mm, voire de 4 à 6mm. Les lamelles sont ainsi peu ou pas perceptibles à l'œil nu, en particulier lorsqu'elles présentent l'épaisseur précitée. A titre d'exemple, l'épaisseur de chaque lame peut être de 0,8 à 2mm, de préférence de 0,8 à 1,5mm, voire de 0,8 à 1,2mm. Dès lors, il peut être plus simple de ne fixer les lamelles qu'à une seule des lames, par exemple la première lame 12.

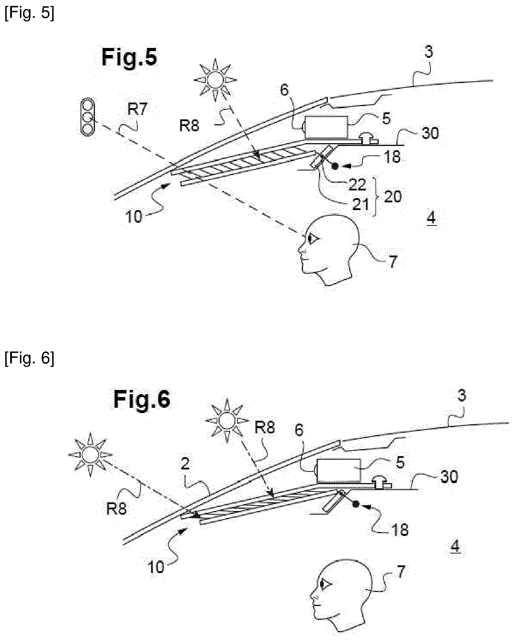

Dans le mode de réalisation représenté sur les figures, le dispositif obturateur de lumière 10 comprend une lame fixe, ici la première lame 12, et une lame mobile, ici la deuxième lame 14. Cette dernière est mobile entre une première position représentée figure 4 dans laquelle les lamelles 16 sont inclinées par rapport à la première lame 12 suivant un premier angle d'inclinaison et une deuxième position représentée figure 6 dans laquelle les lamelles 16 sont inclinées par rapport à la première lame 12 suivant un deuxième angle d'inclinaison inférieur au premier angle d'inclinaison.

On notera que la lame mobile 14 peut adopter toute position entre les première et deuxième positions, de manière continue ou discontinue. La figure 5 représente par exemple une position intermédiaire de la deuxième lame mobile 14.

Notamment, à titre d'exemple, le premier angle d'inclinaison peut être de 30° à 100° et le deuxième angle d'inclinaison peut être de 5° à 25°. L'invention n'est toutefois pas limitée à ces valeurs d'angles qui dépendent de l'orientation de la première lame par rapport au vitrage et de sa position par rapport à la lentille de la caméra, ici disposée à une extrémité arrière du dispositif obturateur 10.

Dans l'exemple représenté, dans la deuxième position, les lamelles 16, dirigées vers l'arrière du véhicule, sont inclinées vers l'arrière d'un angle de 0° à 20°par rapport à une direction horizontale. Dans la première position, les lamelles 16 sont inclinées vers l'arrière d'un angle de 25° à 70° par rapport à la direction horizontale.

Lorsque le dispositif obturateur 10 passe d'une position à l'autre, les lamelles 16, par exemple des feuilles de matériau polymère, sont déformées. Cette déformation est plus importante lorsque les lamelles 16 sont fixées aux deux lames que lorsqu'elles ne sont fixées qu'à une seule lame. Dans ce dernier cas, le bord libre de chaque lamelle glisse sur la lame mobile. En variante, les lamelles peuvent être fixées à l'une des lames ou aux deux par une jonction autorisant la rotation des lamelles autour de cette jonction. Les lamelles peuvent alors être rigides et ne pas se déformer lors d'un changement de position de la lame mobile. Cette jonction peut être formée d'un joint, par exemple obtenu lors du collage de la lame.

L'écartement (e) des lamelles 16 peut être identique entre toutes les lamelles ou varier, tel que représenté figure 3. Sur cette figure, on remarque que l'écartement (e') des lamelles 16 disposées ici le plus près de l'arrière du véhicule, autrement dit les lamelles les plus proches de la lentille de la caméra, est inférieur à l'écartement (e) des lamelles 16 situées vers l'avant du véhicule, les plus éloignées de la lentille de la caméra. Ceci permet d'augmenter la visibilité du conducteur ou du passager avant au travers du dispositif obturateur tout en protégeant plus efficacement la caméra des rayons parasites du côté arrière du dispositif.

Dans l'exemple, la première lame 12 du dispositif obturateur s'étend à proximité immédiate de la caméra 5, au moins depuis la lentille 6 de celle-ci jusqu'au pare-brise 2. En outre, la surface de la première lame 12 est suffisamment grande pour isoler entièrement la lentille 6 du reste de l'habitacle 4. Ainsi, ici, la première lame 12 et par conséquent la deuxième lame 14 s'étendent sur toute la largeur du pare-brise 2 suivant la direction transversale du véhicule tel que visible figure 1.

On notera que le dispositif obturateur 10 n'est donc pas disposé parallèlement au pare-brise 2 afin qu'il soit en contact, ou quasiment en contact, avec ce dernier du côté de son extrémité avant, tout en libérant suffisamment d'espace verticalement du côté de son extrémité arrière pour disposer la caméra 5 entre le dispositif obturateur 10 et le toit du véhicule.

Par ailleurs, l'angle d'inclinaison alpha (α) des lamelles par rapport à la première lame 12 et l'écartement (e) des lamelles les unes par rapport aux autres sont choisis de sorte des rayons lumineux indésirables R2 à R6 provenant de l'habitacle et entrant par la deuxième lame sont arrêtés par une lamelle 16 et ne sortent pas par la première lame en direction de la lentille de la caméra ou sortent par la première lame dans une direction particulière qui n'est pas dirigée vers la lentille de la caméra et sont réfléchis par le vitrage dans une direction de réflexion qui n'est pas dirigée vers la lentille de la caméra.

Dans l'exemple, la direction longitudinale L des lamelles 16 s'étend suivant une direction parallèle à la surface du vitrage, ici suivant la direction transversale du véhicule. Ces lamelles 16 sont inclinées vers l'arrière du véhicule par rapport à la première lame, ceci permet au conducteur 7 (ou au passager avant) de voir au travers du dispositif obturateur, tel que représenté symboliquement figure 5 par la flèche R7. Cette vision est également possible dans la première position de la figure 4. Dans la position intermédiaire de la figure 5, comme dans la deuxième position de la figure 6, on notera que certains rayons R8 du soleil sont arrêtés par le dispositif obturateur de lumière, qui sert alors de pare-soleil.

Le dispositif obturateur de lumière 10 représenté sur les figures présente un organe de commande 18 du déplacement de la lame mobile 14. Il s'agit ici d'une tige solidaire d'un bord arrière 14b de la deuxième lame 14 qui permet de déplacer celle-ci.

Dans l'exemple, l'organe de commande 18 est associé à un système de guidage 20, comprenant ici un guide 21 (ou glissière) pour le guidage en coulissement d'un doigt 22 solidaire de l'organe de commande 18. Le guide 21 peut être équipé d'un organe de type crémaillère (non représenté) permettant de maintenir le doigt 22 dans une ou plusieurs positions intermédiaires entre les deux positions extrêmes (première et deuxième positions).

Le guide 21 est dessiné de manière à que la position la plus avancée de la lame inférieure 14 (première position) corresponde à des positions de lamelles 16 qui empêchent la lumière provenant de l'intérieur de l'habitacle 4 (écrans, réflexions sur la surface intérieure du pare-brise...) d'arriver directement ou par réflexion sur la lentille 6 de la camera 5 afin de ne pas perturber le fonctionnement de celle-ci. Dans toutes les positions plus reculées de la lame inférieure 14, les lamelles 16 sont davantage couchées, ce qui est optiquement au moins aussi efficace pour isoler la caméra 5 des lumières parasites. La fonction d'obturation de la caméra 5 est donc assurée quelque-soit l'état du dispositif obturateur 10.

La position avancée (première position) de la lame inférieure 14 est conçue de manière à laisser entrer dans l'habitacle une partie importante de la lumière venant de l'extérieur, afin que l'occupant puisse bénéficier de cette luminosité et de la meilleure vision haute et avant possible à travers le pare-brise.

Lorsque le besoin se fait sentir, par exemple lorsque le soleil et ses rayons R8 sont gênants, l'occupant 7 peut commuter le dispositif obturateur 10 dans un état dans lequel la lame inférieure 14 est plus reculée (deuxième position, figure 6) afin que les lamelles 16 occultent la lumière extérieure passant par le haut du pare-brise en direction de l'occupant.

L'organe de commande 18 et son système de guidage 20 peuvent suffire lorsque les lamelles 16 sont fixées aux deux lames 12, 14. Afin d'assurer un meilleur maintien du dispositif obturateur 10, ou lorsque la lame mobile n'est pas solidarisée aux lamelles 16, on peut également prévoir un autre système de guidage 24 du type de celui représenté figure 2 et comprenant deux glissières 24a, 24b disposées suivant la direction longitudinale du véhicule.

L'invention n'est toutefois pas limitée à ces agencements particuliers, des systèmes de guidage tels que des rails, ou des ensembles crémaillères/roues dentées ou tout autre organe de guidage pouvant être prévu. De manière similaire, l'organe de commande pourrait présenter une autre forme pourvu qu'il permette de déplacer la lame mobile.

On notera que dans l'exemple, la première lame 12 est fixée du côté de son bord transversal arrière 12b à un support 30 fixe, par exemple fixé à un élément de structure ou de garniture du véhicule, situé à sous le toit panoramique 3, à proximité de sa jonction avec le pare-brise 2. Cette fixation peut être obtenue par tout moyen tel que vissage, rivetage, emboîtement, collage. Le bord transversal avant 12a de la première lame est appliqué contre le pare-brise, éventuellement fixé à celui-ci, par exemple par collage. Le système de guidage 20 précédemment décrit est également fixé au support 30. La caméra 5 repose ici sur la première lame 12. Elle pourrait également reposer directement sur le support 30. Le système de guidage 24 peut quant à lui être fixé sur les bords latéraux du véhicule, par exemple au support 30 et au pare-brise 2.

L'invention n'est bien entendu pas limitée à ce montage particulier du dispositif obturateur. Par exemple la caméra pourrait être fixée directement à un élément de structure du véhicule ou à un élément de garniture et servir de support pour le dispositif obturateur.

Tel que visible figure 1, le dispositif obturateur de lumière 10 occupe une surface restreinte, notamment suivant la direction longitudinale du véhicule. A titre d'exemple, le dispositif obturateur selon l'invention peut présenter une dimension de 10 à 30 cm suivant la direction longitudinale du véhicule, selon le besoin, le contexte (inclinaison du pare-brise, position de conduite du véhicule, etc). Il permet de réaliser un toit panoramique dans la continuité du pare-brise en améliorant la visibilité du conducteur vers le haut et en protégeant de manière efficace la caméra. Il assure également une fonction de pare-soleil lorsque l'une de ses lames est mobile.

L'invention permet ainsi de supprimer pour l'occupant le masque créé par la coque montée sur le pare-brise qui cache habituellement l'obturateur caméra. On pourra ainsi dans le futur encore augmenter le champ de vision des cameras sans dégrader l'ergonomie pour les occupants. Le dispositif permet également de remplacer les pare-soleils, donc de s'affranchir de leur encombrement longitudinal sur le pavillon quand ils sont inutilisés. On pourrait donc agrandir les toits ouvrants et toits panoramiques. Le dispositif permet également d'améliorer l'esthétisme des obturateurs de caméra.

L'invention a été décrite en référence à un dispositif obturateur positionné à l'avant du véhicule, en position haute. Le dispositif obturateur pourrait également être positionné à l'arrière du véhicule à proximité de la vitre arrière, en position haute à proximité du toit. Dans ce cas, il peut également jouer le rôle de pare-soleil pour les occupants assis à l'arrière du véhicule. Le dispositif obturateur pourrait également être situé en position basse, à proximité du bord transversal inférieur de la vitre arrière. Dans ce cas, il servirait essentiellement à protéger une caméra des rayons parasites provenant de l'habitacle.

## Revendications

1. Dispositif obturateur de lumière (10) destiné à protéger une caméra (5) positionnée à proximité du vitrage (2) d'un véhicule automobile de la lumière provenant de l'intérieur de l'habitacle (4), **caractérisé en ce qu'**il comprend :
- une première lame plane transparente (12),
- une deuxième lame plane transparente (14) présentant une surface au moins égale à la première lame (12), la deuxième lame (14) étant située à distance de la première lame (12) et séparée de celle-ci par une couche d'air, la deuxième lame (14) formant avec la première lame (12) un angle de 0° à 20°,
- une pluralité de lamelles opaques (16) parallèles ou sensiblement parallèles disposées entre les deux lames planes transparentes (12, 14) et s'étendant d'une lame à l'autre, les lamelles (16) étant inclinées par rapport aux deux lames planes transparentes (12, 14),
- l'angle d'inclinaison (α) des lamelles (16) par rapport à la première lame (12) et l'écartement (e) des lamelles (16) les unes par rapport aux autres étant choisis de sorte que des rayons lumineux (R1, R2, R4, R5, R6) entrant par la deuxième lame (14) sont arrêtés par une lamelle (16) et ne sortent pas par la première lame (12) ou sortent par la première lame (12) dans une direction particulière.

2. Dispositif obturateur de lumière (10) selon la revendication 1, **caractérisé en ce que** les lamelles (16) sont chacune fixées à la première lame (12) et à la deuxième lame (14) ou **en ce que** les lamelles (16) sont uniquement fixées à l'une des lames et en appui contre l'autre lame.

3. Dispositif obturateur de lumière (10) selon l'une quelconque des revendications 1 ou 2, **caractérisé en ce qu'**il comprend au moins une des caractéristiques suivantes :
- la première et la deuxième lame sont en un matériau transparent choisi parmi un verre minéral et un verre organique,
- chaque lamelle est formée d'une feuille de matériau polymère opaque.

4. Dispositif obturateur de lumière (10) selon l'une quelconque des revendications 1 à 3, **caractérisé en ce qu'**une lame (12) est fixe et l'autre (14) lame est mobile entre une première position dans laquelle les lamelles (16) sont inclinées par rapport à la première lame suivant un premier angle d'inclinaison et une deuxième position dans laquelle les lamelles (16) sont inclinées par rapport à la première lame suivant un deuxième angle d'inclinaison inférieur au premier angle d'inclinaison.

5. Dispositif obturateur de lumière (10) selon la revendication 4, **caractérisé en ce qu'**il comprend au moins un organe de commande (18) du déplacement de la lame mobile (14).

6. Dispositif obturateur de lumière (10) selon la revendication 4 ou 5, **caractérisé en ce qu'**il comprend au moins un système de guidage (20, 24) du déplacement de la lame mobile (14).

7. Véhicule automobile (1) comprenant à l'intérieur d'un habitacle (4), au moins une caméra (5) équipée d'une lentille (6) positionnée à proximité d'un vitrage (2) du véhicule automobile, **caractérisé en ce qu'**un dispositif obturateur de lumière (10) selon l'une quelconque des revendications 1 à 6 est disposé en regard du vitrage, d'un côté de la caméra opposé au vitrage, la première lame (12) du dispositif obturateur s'étendant à proximité immédiate de la caméra (5), au moins depuis la lentille (6) de la caméra jusqu'au vitrage, la surface de la première lame étant suffisamment grande pour isoler entièrement la lentille (6) de la caméra du reste de l'habitacle du véhicule, l'angle d'inclinaison et l'écartement des lamelles étant choisis de sorte des rayons lumineux indésirables provenant de l'habitacle et entrant par la deuxième lame (14) sont arrêtés par une lamelle (16) et ne sortent pas par la première lame (12) ou sortent par la première lame (12) dans une direction particulière qui n'est pas dirigée vers la lentille de la caméra et sont éventuellement réfléchis par le vitrage (2) dans une direction de réflexion qui n'est pas dirigée vers la lentille de la caméra.

8. Véhicule automobile (1) selon la revendication 7, **caractérisé en ce que** les lamelles (16) présentent une direction longitudinale qui s'étend suivant une direction parallèle à la surface du vitrage (2) et sont inclinées vers une partie centrale de l'habitacle par rapport à la première lame (12).

9. Véhicule automobile (1) selon la revendication 8 lorsqu'il dépend de l'une des revendications 4 à 6, **caractérisé en ce que** dans la première position de la lame mobile (14), les lamelles (16) sont inclinées vers une partie centrale de l'habitacle suivant un angle de 25° à 70° par rapport à une direction horizontale et dans la deuxième position de la lame mobile (12), les lamelles sont inclinées vers une partie centrale de l'habitacle suivant un angle de 0° à 20°par rapport à la direction horizontale.

10. Véhicule automobile (1) selon l'une quelconque des revendications 7 à 9, **caractérisé en ce que** des lamelles (16) proches de la lentille (6) de la caméra présentent un écartement (e) inférieur à l'écartement des lamelles (16) distantes de la lentille de la caméra.
